# EUROPEAN PATENT SPECIFICATION

(11) **EP 1 713 836 B1**
(45) Date of publication and mention of the grant of the patent: **24.12.2014**
(21) Application number: 04793505.1
(22) Date of filing: 15.10.2004
(51) Int. Cl.: C08F 4/64, C08F 4/02, C08F 10/00

(54) **PREPARATION METHOD OF POLYMERISATION CATALYST FOR PRODUCTION OF POLYETHYLENE WITH BROAD MOLECULAR WEIGHT DISTRIBUTION**
HERSTELLUNGSVERFAHREN FÜR POLYMERISATIONSKATALYSATOR POLYMERISATIONSKATALYSATOR ZUR HERSTELLUNG VON POLYETHYLEN MIT BREITER MOLEKULARGEWICHTSVERTEILUNG
PROCEDE DE PREPARATION DE CATALYSEUR DE POLYMERISATION POUR LA PRODUCTION DE POLYETHYLENE A LARGE DISTRIBUTION DES POIDS MOLECULAIRES

(30) Priority: 17.10.2003 KR 2003072532
(43) Date of publication of application: 25.10.2006
(73) Proprietor: HANWHA CHEMICAL CORPORATION, Seoul 100-797 (KR)
(72) Inventor: KIM, Myoung-Un, Yuseong-Gu, Daejeon 305-720 (KR); KIM, Jin-Dong, Yuseong-Gu, Daejeon 305-720 (KR); NA, Yong-Hwan, Nam-Gu, Incheon 420-020 (KR)
(74) Representative: Beckmann, Claus
(86) International application number: PCT/KR2004/002645
(87) International publication number: WO 2005/037874

(56) References cited:
- EP-A1- 0 408 750
- EP-A1- 0 799 840
- US-A- 5 629 253
- US-A- 6 051 525
- US-A- 6 124 412
- US-B1- 6 399 531
- US-B1- 6 444 605
- US-B1- 6 583 241

## Description

### Technical Field

The present invention is related to a method of manufacture of silica-impregnated polymerization catalysts with which ethylene having a broad molecular weight distribution singly or alpha-olefin copolymers may be manufactured. In more detail, the present invention is for the manufacture of polyolefin polymerization catalysts offering olefin polymers having a broad molecular weight distribution (melt flow ratio, MFR, MFI/MI > 30), not obtained from the conventional Ziegler-Natta catalysts. In the present invention, specific components of Ziegler-Natta catalysts are impregnated in a specific order successively on a silica support, with which polyethylene having a molecular weight distribution of 40 to 50 usually based on the melt flow ratio (MFI/MI) can be manufactured, and activated.

### Background Art

The conventional polyethylene polymerization catalysts may be largely classified into Ziegler-Natta catalysts, chrome-group catalysts, and metallocene-group catalysts. Generally, among molecular weight distribution characteristics of polymers produced when these catalysts are used, the melt flow ratio (MFR) of metallocene catalysts is 15 - 20, that of Ziegler-Natta catalysts is 25 - 30, and that of chrome-group catalysts is 60 - 130.

Compared to metallocene-group catalysts and Ziegler-Natta catalysts, chrome-group catalysts are characterized by having a broad molecular weight distribution and a good processibility. Particularly, chrome-group catalysts are used for the manufacture of products requiring for processibility in industrial fields. However, since chrome-group catalysts are problematic in that it is very difficult to control the molecular weight and density of polymers produced generally, the products that may be manufactured are limited to a part of products having a high molecular weight among high-density polyethylene.

On the other hand, since factors controlling the molecular weight and density of polymers produced are independent for Ziegler-Natta catalysts, the molecular weight of polymers is usually controlled by changing the amount of hydrogen to be added, and similarly, the density of polymers is controlled by changing the concentration of the alpha-olefin supplied in the form of a comonomer. Therefore, Ziegler-Natta catalysts are advantageous in that they have a very wide range of products that may be manufactured irrespective to their molecular weights ranging from high-density polyethylene to low-density polyethylene. And yet, they are limited in being applied to the products requiring for processibility since their molecular weight distribution is generally narrower than that of chrome-group catalysts.

In other words, resins having a narrow molecular weight distribution are useful for injection moulding or rotary moulding, but has a low productivity due to the increase in resin pressure during extrusion moulding and an inconsistent quality of the products moulded. Therefore, in order to solve such disadvantages in processing, multi-step polymerization methods are adopted, or methods mixing resins having different molecular weight distribution are used. However, such methods require for additional equipment as well as high-level technologies for the control of the ratio for blending, etc.

In order to improve the above-described disadvantages, a series of attempts to develop Ziegler-Natta catalysts which enable the production of resins having a wide molecular weight distribution and the control of density and molecular weight of polymers has been performed, most of which is mainly technology using binary-system transition metals. Disclosed in Korean Patent No. 256460 is a method of manufacture of polyethylene having a wide molecular weight distribution using mixed catalysts of titanium compounds and vanadium compounds. Also disclosed in the U.S. Patent No. 4,918,038 and European Patent No. 646604 are methods of manufacture of polyethylene having a double molecular weight distribution using binary-system catalysts in which metallocene catalysts and Ziegler-Natta catalysts are mixed in order to eventually extend the molecular weight distribution. However, such binary-system catalysts are problematic in that it is very difficult to combine two types of catalysts and it is complicated to manufacture them since characteristics of two types of catalysts mixed are different significantly.

In the mean time, disclosed in Korean Patent No. 146675 is a method of extending molecular weight distribution of polyethylene resins by adding various kinds of modifiers called alkyl iodides during the process of using Ziegler-Natta catalysts. However, if the molecular weight distribution is extended according to the method of using modifiers as disclosed in Korean Patent No. 146675, there occur problems that physical properties of the products may not be improved, since only low molecular weight components are increased, and the cost of manufacture of products is increased since modifiers are added separately during the process.

EP 0 799 840 A1 describes a process for the manufacture of a solid catalytic compound comprising: (a) contacting a solid support consisting of at least 5 hydroxyl groups attached to the surface per mm² and an organic magnesium derivative, to obtain a solid; (b) contacting this solid with a coloring agent to obtain a second solid and (c) impregnating the second solid with a transition metal. Also described are: (i) a solid catalyst obtained by the claimed process; (ii) a process for the preparation of a prepolymer using the catalyst made by the claimed process; (c) a prepolymer which undergoes polymerization in the claimed process; (d) a process of (co)polymerization of at least one olefin in the presence of the claimed catalyst or prepolymer; and (e) an ethylene/alpha-olefin copolymer.

EP 0 408 750 A1 describes carrier-supported titanium catalyst components containing magnesium, aluminum, halogen and titanium as essential ingredients, which are obtained by a reaction of [I] a magnesium containing support obtained by previously bringing a support into contact with an organometallic compound of a metal of the Group II to IIIA of the periodic table having at least one hydrocarbon group attached directly to the metal atom or with a halogen containing compound, followed by contact with a magnesium compound in the liquid state having no reducing ability, [II] a reducing organometallic compound, and [III] a titanium compound in the liquid state, and processes for preparing the same and, at the same time, catalysts containing the above-mentioned catalyst components for use in preparing ethylene polymer and processes for preparing ethylene polymer using the catalyst for use in preparing ethylene polymer.

Up to the present time, there have been many attempts to manufacture polyethylene polymers having a wide molecular weight distribution by using Ziegler-Natta catalysts. However, there have been published no cases related to catalysts meeting the object of proper controlling of molecular weight distribution for processing with a polymerization catalyst per se without additional input of a modifier as a single catalyst system during a reaction.

Accordingly, the main object of the present invention is to provide a method for the preparation of a titanium-group Ziegler-Natta catalysts having a single metal component, which enable the production of polyethylene polymers having a wide molecular weight distribution, the control of the density of polymers produced by using alpha-olefins as copolymers, the control of the molecular weight through the control of the amount of hydrogen, according to a simple manufacturing process.

### Disclosure of Invention

Surprisingly, researchers of the present invention have invented a simple manufacturing of catalysts for the manufacture of polyethylene polymers, enabling the manufacture of olefin polymers having a wide molecular weight distribution.

Thus, the invention provides a method of manufacture of olefin polymerization catalysts comprising the sequential steps of:
i) manufacture of modified silica having a modified surface which was treated with an aluminum alkyl, alkyl magnesium halide, chlorotrimethyl silane or trichloroborane;
ii) impregnation of a magnesium halide into said modified silica;
iii) impregnation of an alkyl aluminoxane into said modified silica into which said magnesium halide is impregnated; and
iv) impregnation of a titanium compound into said modified silica into which said magnesium halide and said alkyl aluminoxane are impregnated;
wherein the magnesium halide is a magnesium dihalide.

Single-component-system Ziegler-Natta catalysts are manufactured according to the present invention by the following steps:
1) modification of the surface of silica used for a support;
2) impregnation of a magnesium dihalide on the silica support;
3) impregnation of an alkyl aluminoxane; and
4) impregnation of a titanium compound.

Therefore, an object of the present invention is to provide a method of manufacture of catalysts for the manufacture of polyolefin polymers having a broad molecular weight distribution according to the above steps of manufacture.

A further embodiment of the present invention is to provide a method of manufacture of catalysts using an alkyl aluminoxane which is insoluble in the hydrocarbon solvent, as well as catalysts manufactured according to such method.

To be noted here is that, in the order of arrangement of steps of manufacture adopted in the present invention, although the same compositional components are used, if the order of impregnation is changed deviating from the above order of steps of manufacture, it is not possible to manufacture polyolefins having a wide molecular weight distribution and to manufacture polymers allowing an easy control of density accordingly, contrary to the objects of the present invention. Therefore, the change in the above steps of manufacture of catalysts may be said to be a variable affecting the molecular weight distribution of polyethylene polymerized using the catalyst thus manufactured.

Further, individual compound itself comprising catalysts impregnated in each step of manufacture is characterized by the order of arrangement and the type of compound, use of a compound having such particular physical properties is also a characteristic of the present invention, and the amount of use of a compound is an amount used by a person skilled in the art, in order for polyolefins having a wide molecular weight distribution to be manufactured according to the present invention.

As to the catalysts for the polymerization of olefins manufactured according to the above steps of manufacture, all porous silicas having minute pores on the surface and a large surface area may be used for supports. However, in order to increase the activity of catalysts, preferably, the particle size should be usually 5 microns to 100 microns that are proper for polyolefin polymerization catalysts, the surface area should be greater than 100 m²/g, and the pore volume should be greater than 1.0 cc/g. More preferably, the surface area should be greater than 300 m²/g, and the pore volume should be greater than 1.5 cc/g. If the above ranges are deviated, it is difficult to handle products, to obtain desired physical properties, to obtain polyolefins having even physical properties, and to have a superior activity of catalysts.

Since the above-described silica includes a hydroxyl radical on its surface, in order for it to be used for the support of polymerization catalysts, the hydroxyl radical is treated chemically or physically. Particularly, in order for it to be used for the polymerization catalyst manufactured according to the present invention, it is treated with a compound selected from aluminum alkyl, alkyl magnesium halide, chlorotrimethyl silane, and trichloroborane, preferably under the condition of high-temperature vacuum drying and organic solvent such as tetrahydrofuran, etc. at all times. Any of methods for the modification of supports for processing of polymerization catalysts known generally in the art is acceptable.

In the impregnation of a magnesium halide into a silica support, of which surface is modified, according to the above method, it is preferable that the amount of impregnation of magnesium dihalide is 0.1 to 10 mmole/g based on the silica, more preferably, 1.0 to 5.0 mmole/g. Magnesium dichloride, magnesium dibromide, or magnesium diiodide is acceptable for the magnesium dihalide, but preferably, magnesium dichloride. For the method of impregnation of the above magnesium dichloride, various methods have been known. Among them, there are a direct method of impregnation in which magnesium chloride is dissolved in an alcohol-group solvent such as ethanol, etc. or an ether-group solvent such as tetrahydrofuran, etc. (direct method); and a method of conversion of an alkyl magnesium chloride (RMgCl) solution into magnesium chloride by treating with a Lewis acid such as tetrachlorosilane, boron chloride, etc. after the alkyl magnesium chloride solution is impregnated (indirect method). Any of these two types of methods known generally may be used for the present invention.

Next, in the manufacture of polymerization catalysts of the present invention, what is very important is the pre-treatment process of a silica support, into which a magnesium halide is impregnated, with an aluminum alkyl compound. The aluminum alkyl compound to be used here should be an alkyl aluminoxane having a very low solubility in a hydrocarbon solvent such as hexane, pentane, etc. at all times, where it may be used singly or in combination with others. As described in the above, it is possible to use commercialized alkyl aluminoxane compounds having a very low solubility in the above aliphatic hydrocarbons.

In other words, the alkyl aluminoxane compounds used for the present invention are those that have a high solubility in aromatic hydrocarbons but a low solubility in aliphatic hydrocarbons, for example, P-MAO, AKZO products, or Albarmal products. To be noted here is that there are alkyl aluminoxanes having a very high solubility in aliphatic hydrocarbons as well such as AKZO product M-MAO, Albamal product D-MAO, etc. Use of alkyl aluminoxanes having a high solubility to hyudrocarbon compounds makes it difficult to obtain products having physical properties to be achieved in the present invention.

Aluminoxane compounds are dissolved in aromatic solvents such as toluene, xylene, benzene, etc. and impregnated into silica supports on which a magnesium halide is impregnated. The aluminoxane compound that is dissolved and impregnated into an aromatic solvent has a very low solubility or is insoluble in aliphatic hydrocarbon solvents such as isopentane, hexane or heptane that are hydrocarbon solvents used for the impregnation of the titanium compound in the post-process, and therefore, it is possible to manufacture catalysts having characteristics to be achieved in the present invention. If the aluminoxane impregnated into the aliphatic hydrocarbon solvent is dissolved, it is dissolved in the aliphatic hydrocarbon solution in the post-process, and dissolved during the step of impregnation of the titanium compound. And therefore, it is difficult to manufacture polyolefins having a wide molecular weight distribution to be achieved in the present invention, and there occur many disadvantages such as uneven compositional components of catalysts, inconsistent quality of polyolefin thus manufactured.

Any of alkyl aluminoxanes known generally in the art may be used. Preferably, chain-type aluminoxanes as shown in Chemical Formula 1 and ring-type aluminoxanes as shown in Chemical Formula 2 may be used, and more preferably, ring-type aluminoxanes having Chemical Formula 2 are more advantageous in view of the solubility in aliphatic hydrocarbon solvents.

[Chemical Formula 1] R₂Al-O(-Al(R)-O)n-AlR₂

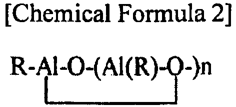

where R is an alkyl radical having 1 to 8 carbon atoms, and n is an integer between 1 and 100. Preferably, R is methyl radical, ethyl radical, propyl radical, or butyl radical, and n is an integer which is greater than 2, preferably, an integer between 5 and 40.

Typical examples of the above alkyl aluminoxane include methylaluminoxane (MAO) and ethylaluminoxane (EAO). Even if a compound is sold in the form of a compound having the above structure, if the compound is dissolved in aliphatic hydrocarbons due to the mixed state or specific microstructural difference such as molecular weight, etc., it is not used for the present invention. As to the amount of use of the above aluminoxane in the process of treating it with the silica support into which magnesium halide is impregnated, the Al/Mg ratio may be 1.0 to 100 mole ratio, preferably, 3.0 to 10 mole ratio.

In order to complete the manufacture of polymer catalysts of the present invention, there is a process of impregnation of a titanium compound into the silica support treated with the above aluminoxane, where the titanium compound should be a compound which is soluble into hydrocarbon solvents such as pentane, isopentane, hexane, heptane, etc. at all times and has a structure shown in the following Chemical Formula 3:

[Chemical Formula 3] (RO)ₙTiX₍₄₋ₙ₎

where R is a hydrocarbon having 1 to 20 carbon atoms, X is Cl, Br, I, or a pseudohalide, and n is an integer between 0 and 4.

In more detail, the compounds having the above Chemical Formula 3 include tetrachlorotitanium, tetraethoxytitanium, tetramethoxytitanium, tetraisopropoxytitanium, chlorotriethoxytitanium, chlorotrimethoxytitanium, dichlorodimethoxytitanium, dichlorodiethoxytitanium, dichlorodiisoproxytitanium, dichlorodibuthoxytitanium, trichloromethoxytitanium or trichloroethoxytitanium.

For the solvent used in the process of impregnation of the above titanium compound into the silica support treated with aluminoxane, any non-protonic organic solvent is acceptable, preferably, hexane or heptane, and preferably, a 0.1 to 1.0 mole solution, more preferably, a 0.2 to 0.5 mole solution. The amount of use is somewhat different according to the pore volume of silica to be used. It is proper to use 2 to 5 times of the pore volume of silica to be used, i.e., in the range of 0.1 mmole/g to 2.0 mmole/g based on the amount impregnated into the silica. The titanium compound in an amount of this degree is impregnated in the range of 1.0 to 50 mole ratio in terms of Al/Ti mole ratio; and the lower the initial temperature for the addition of compounds, the better, since aluminoxane and the titanium compound react chemically during the process of impregnation of the titanium compound and heat is generated. Preferably, the temperature should be -20 to 50°C, more preferably, 0 to 20°C.

The polymerization of compounds using the catalysts manufactured according to the present invention may be performed in the slurry phase, liquid phase, gas phase, or bulk phase. If the polymerization is performed in the liquid or slurry phase, it is possible to use the solvent or olefin itself as a medium, where the olefin may be used singly or in combination with two or more kinds of olefins. Examples of the solvents to be used include butane, pentane, hexane, heptane, octane, cyclopentane, cyclohexane, etc., where they may be mixed at a fixed ratio before being used.

Olefins used for the copolymers include C₃₋₂₀-alpha-olefins such as propylene, 1-butene, 1-pentene, 1-hexene or 1-octene, where they may be used singly or mixed for polymerization.

In the polymerization of olefins using the catalysts manufactured according to the present invention, the polymerization temperature is not limited specially. However, it should be 0 to 200°C, preferably 50 to 150°C. Polymerization is done in the batch, semi-continuous, or continuous method at a pressure of 1.0 to 100 atmosphere usually, preferably, 2.0 to 30 atmosphere.

The foregoing and other objects, aspects, and advantages will be better understood from the following detailed description of manufacturing examples and preferred embodiment:

### [Manufacturing Example 1] Manufacture of impregnation catalysts

### A) Modification of silica surface

In a 2-liter flask, 100 g of silica (Grace Davidson Company, #948) (300 m²/g, 1.5 cc/g, 50 µm) is filled. It is then heated to 200°C by using a mantle, vacuum-dried for 5 hours using a vacuum pump, and cooled slowly to a room temperature. 50 g of dehydrated silica is put into a 500-ml flask, and 100 ml of a 1.0 mole ethylmagnesium chloride solution in tetrahydrofuran is added slowly for 30 minutes at 0°C and mixed for 2 more hours. Mixing should be done while removing the gas generated since an exothermic reaction occurs and ethane gas is generated. The slurry reacted completely is filtered, unreacted ethylmagnesium chloride compound is removed by washing it with 100 ml of the tetrahydrofuran solvent twice, and the product is vacuum-dried at 50°C until it becomes fluidal powder.

### B) Impregnation of magnesium chloride

To a 500-ml Schlenk flask, 10 g of the silica, of which hydroxyl radical (-OH) on its surface is modified with magnesium chloride (MgCl₂), is put into, 30 ml of a 1.0 mole magnesium chloride solution in ethanol is added while mixing and mixed for 2 hours, then the mixture is filtered by using a filter cannula in order to remove the excessive amount of ethanol solution, washed once more with 30 ml of ethanol, vacuum-dried at 50°C for 1 hour, and vacuum-dried further for 1 more hour at 100°C in order to obtain white fluidal powder.

### C) Impregnation of methylaluminoxane

To the above white powder in B), 30 ml of a methylaluminoxane solution (P-MAO, 9.5 wt% Al, AKZO) in toluene is added at 20°C, mixed for 1 hour, and vacuum-dried at 50°C in order to obtain a catalyst precursor into which methylaluminoxane is impregnated.

### D) Impregnation of a titanium compound

To the above catalyst precursor in C), 20 ml of a 0.5 mole titanium chloride solution (TiCl₄) in hexane is added at 0°C, and mixed at a room temperature for 1 hour in order to obtain a red-brown slurry. This red-brown slurry is filtered, washed twice with each 30 ml of hexane, and vacuum-dried in order to obtain a red-brown fluidal powdery catalyst.

### [Manufacturing Example 2]

The same method of manufacture of catalysts as that of Manufacturing Example 1 is used except for the use of a 1.0 mole triethylaluminum solution in hexane instead of ethylmagnesium chloride in Step A) of Manufacturing Example 1.

### [Manufacturing Example 3]

The same method of manufacture as that of Manufacturing Example 1 is used except for the use of the MS-3030 product (317 m²/g, 3 cc/g, 90 µm) of PQ instead of the #948 product of Grace Davidson Company for the silica.

### [Manufacturing Example 4] (for comparison)

Catalysts are manufactured according to only Steps C) and D) of Manufacturing Example 1 without performing Steps A) and B) using the SYLOPOL 5550 product (average particle size of 50 µm, amount of impregnation of magnesium dichloride of 2 mmole - Mg/g - silica) of Grace Davidson Company, which is sold with magnesium chloride impregnated already, instead of the #948 product of Grace Davidson Company for the silica.

### [Comparative Manufacturing Example 1]

The same method of manufacture as that of Manufacturing Example 1 is used except for the use of a 1.0 mole triethylaluminum solution in hexane instead of methylaluminoxane in Step C) of Manufacturing Example 1.

### [Comparative Manufacturing Example 2]

The same method of manufacture as that of Manufacturing Example 4 is used except for the use of a 1.0 mole triethylaluminum solution in hexane instead of methylaluminoxane in Step C) of Manufacturing Example 4.

### [Comparative Manufacturing Example 3]

If catalysts are manufactured by performing Steps C) and D) directly without performing Step B) of Manufacturing Example 1, no catalytic activities are shown.

### [Comparative Manufacturing Example 4]

If catalysts are manufactured by altering Steps C) and D) of Manufacturing Example 1, the objects of the present invention are not achieved by employing the usual Ziegler-Natta catalyst manufacturing method, catalytic activities are lowered below 10 times significantly, and catalysts are not manufactured evenly.

### [Preferred Embodiment 1] Evaluation of characteristics of ethylene-polymerization

In order to evaluate characteristics of catalysts manufactured in the above Manufacturing Examples 1 through 4 and ethylene polymerization catalysts of Comparative Manufacturing Examples 1 and 2, slurry polymerization experiments are performed by using each catalyst in a 2-liter polymerization reactor. Polymerization experiments are performed under the same conditions for each of the above catalysts except for the use of different kinds of catalysts. Those conditions include 100 mg for the amount of use of a catalyst, 800 ml of heptane for a polymerization medium, 85°C of a polymerization temperature, 8.5 atmosphere for the partial ethylene pressure, 1.5 atmosphere for the partial hydrogen pressure, 10 ml of 1-hexene for a copolymer, 2 ml of a 1.0 mole triethylaluminum solution (TEAL) in hexane for a cocatalyst, and 30 minutes for the time of polymerization. Catalytic activities are compared by measuring the weight of polymers obtained after finishing polymerization, and molecular weight distribution characteristics are compared and evaluated by measuring MI (melt index) and MFR (melt flow ratio) as shown in the following Table 1:

**[Table 1] Results of evaluation of characteristics of polymerization catalysts manufactured according to the present invention**

| Name of catalyst | Catalytic activity (g-PE/g-catalyst, h) | MI (g/10 min) | MFR (I₂₁/I₂) |
|---|---|---|---|
| Catalyst in Manufacturing Example 1 | 3400 | 0.42 | 43 |
| Catalyst in Manufacturing Example 2 | 3200 | 0.53 | 45 |
| Catalyst in Manufacturing Example 3 | 2700 | 0.71 | 40 |
| Catalyst in Manufacturing Example 4 | 3800 | 0.47 | 46 |
| Catalyst in Comparative Example 1 | 1100 | 0.73 | 29 |
| Catalyst in Comparative Example 1 | 1700 | 0.65 | 28 |

It is seen in Table 1 that the activities of catalysts manufactured according to the present invention are very superior, and it is possible to obtain polymers having a wide range of molecular weight in that the magnitude of MFR of the catalysts of the present invention from which the range of molecular distribution may be known, is greater than 25 - 30 which is the MFR of usual Ziegler-Natta catalysts.

It is also seen that the catalytic activities of catalysts, into which an alkyl aluminum is impregnated instead of aluminoxane, are lowered greatly as well as the magnitude of MFR, and therefore, it is very difficult to manufacture polymers having a broad molecular weight distribution. Accordingly, it is confirmed that it is possible to obtain polyethylene polymers having a broad molecular weight distribution, never before possible from the traditional Ziegler-Natta catalysts, by adopting impregnation steps by using alkyl aluminoxane compounds that are soluble in aromatic hydrocarbons but insoluble in aliphatic hydrocarbons as in the present invention.

### Industrial Applicability

It is possible to manufacture polyolefins facilitating the control and operation of processes by using catalysts for the manufacture of polyolefins manufactured according to the method of manufacture of olefin polymerization catalysts of the present invention in that it is possible to obtain polyethylene polymers having a broad molecular weight distribution, it is easy to control the density of polymers produced by using alpha-olefins for copolymers as well as the molecular weight through the control of the amount of hydrogen, and it is possible to manufacture polyolefins having a broad molecular weight distribution to be achieved in the present invention by using single-metal-component titanium-group Ziegler-Natta catalysts also in the polymerization reaction process.

## Claims

1. A method of manufacture of olefin polymerization catalysts comprising the sequential steps of:
i) manufacture of modified silica having a modified surface which was treated with an aluminum alkyl, alkyl magnesium halide, chlorotrimethyl silane or trichloroborane;
ii) impregnation of a magnesium halide into said modified silica;
iii) impregnation of an alkyl aluminoxane into said modified silica into which said magnesium halide is impregnated; and
iv) impregnation of a titanium compound into said modified silica into which said magnesium halide and said alkyl aluminoxane are impregnated;
wherein the magnesium halide is a magnesium dihalide.

2. The method of manufacture of olefin polymerization catalysts of claim 1, wherein said alkyl aluminoxane used in the above Step iii) is shown in terms of the following Chemical Formulas 1 and 2, and is one or more compounds selected from a group of compounds that is soluble in aromatic hydrocarbons but insoluble in aliphatic hydrocarbons:
[Chemical Formula 1] R₂Al-O(-Al(R)-O)n-AlR₂ 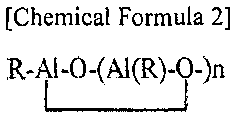
where R is an alkyl radical having 1 to 8 carbon atoms, and n is an integer between 1 and 100.

3. The method of manufacture of olefin polymerization catalyts of claim 2, wherein said alkyl aluminoxane used in the above Step iii) is methylaluminoxane or ethylaluminoxane that is insoluble in aliphatic hydrocarbons.

4. The method of manufacture of olefin polymerization catalysts of claim 1, wherein said titanium compound used in the above Step iv) is a compound selected from a group of compounds that is shown in terms of the following Chemical Formula 3:
[Chemical Formula 3] (RO)ₙTiX₍₄₋ₙ₎
where R is a hydrocarbon having 1 to 20 carbon atoms, X is Cl, Br, I, or a pseudohalide, and n is an integer between 0 to 4.

5. The method of manufacture of olefin polymerization catalysts of claim 4, wherein said titanium compound is one or more compounds selected from tetrachlorotitanium, tetraethoxytitanium, tetramethoxytitanium, tetraisopropoxytitanium, chlorotriethoxytitanium, chlorotrimethoxytitanium, dichlorodimethoxytitanium, dichlorodiethoxytitanium, dichlorodiisopropoxytitanium, dichlorodibuthoxytitanium, trichloromethoxytitanium, and trichloroethoxytitanium.

6. The method of manufacture of olefin polymerization catalysts of claim 1, wherein said magnesium halide is magnesium chloride; said alkyl aluminoxane to be impregnated is a single compound of methylaluminoxane or ethylaluminoxane that is soluble in aromatic hydrocarbons but insoluble in aliphatic hydrocarbons, or a mixture thereof; said titanium compound to be impregnated is a single or mixed compound of tetrachlorotitanium, tetraethoxytitanium, and tetramethoxytitanium.

7. The method of manufacture of olefin polymerisation catalysts of claim 1 wherein the amount of said magnesium dihalide to be impregnated is 1.0 to 5.0 mmole/g based on the amount of silica; the amount of said alkyl aluminoxane is in a range of 1.0 to 100 in terms of the Al/Mg role ratio; and the amount of said titanium compound is in a range of 1.0 to 50 in terms of the Al/Ti mole ratio.

## Patentansprüche

1. Verfahren zur Herstellung von Olefinpolymerisationskatalysatoren, das die aufeinanderfolgenden Schritte umfasst:
i) Herstellung von modifiziertem Silica, das eine modifizierte Oberfläche, die mit einem Aluminiumalkyl, Alkylmagnesiumhalogenid, Chlortrimethylsilan oder Trichlorboran behandelt wurde, hat;
ii) Imprägnieren eines Magnesiumhalogenids in das genannte modifizierte Silica;
iii) Imprägnieren eines Alkylaluminoxans in das genannte modifizierte Silica, in das das genannte Magnesiumhalogenid imprägniert wurde; und
iv) Imprägnieren einer Titanverbindung in das genannte modifizierte Silica, in das das genannte Magnesiumhalogenid und das genannte Alkylaluminoxan imprägniert sind;
wobei das Magnesiumhalogenid ein Magnesiumdihalogenid ist.

2. Verfahren zur Herstellung von Olefinpolymerisationskatalysatoren gemäß Anspruch 1, wobei das genannte Alkylaluminoxan, das in dem obigen Schritt iii) verwendet wird, in Form der folgenden chemischen Formeln 1 und 2 gezeigt ist und eine oder mehrere Verbindung(en), ausgewählt aus einer Gruppe an Verbindungen, die löslich in aromatischen Kohlenwasserstoffen, aber unlöslich in aliphatischen Kohlenwasserstoffen ist, ist:
[Chemische Formel 1] R₂Al-O(-Al(R)-O)n-AlR₂ 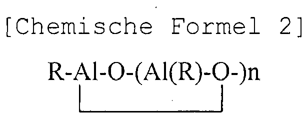
worin R ein Alkylradikal, das 1 bis 8 Kohlenstoffatome hat, ist und n eine ganze Zahl zwischen 1 und 100 ist.

3. Verfahren zur Herstellung von Olefinpolymerisationskatalysatoren gemäß Anspruch 2, wobei das genannte Alkylaluminoxan, das in dem obigen Schritt iii) verwendet wird, Methylaluminoxan oder Ethylaluminoxan, das in aliphatischen Kohlenwasserstoffen unlöslich ist, ist.

4. Verfahren zur Herstellung von Olefinpolymerisationskatalysatoren gemäß Anspruch 1, wobei die genannte Titanverbindung, die in dem obigen Schritt iv) verwendet wird, eine Verbindung ist, die aus einer Gruppe an Verbindungen, die in Form der folgenden chemischen Formel 3 gezeigt ist, ausgewählt ist:
[Chemische Formel 3] (RO)ₙTiX₍₄₋ₙ₎
worin R ein Kohlenwasserstoff, der 1 bis 20 Kohlenstoffatome hat, ist, X für Cl, Br, I oder ein Pseudohalogenid steht und n eine ganze Zahl zwischen 0 bis 4 ist.

5. Verfahren zur Herstellung von Olefinpolymerisationskatalysatoren gemäß Anspruch 4, wobei die genannte Titanverbindung eine oder mehrere Verbindung(en), ausgewählt aus Tetrachlortitan, Tetraethoxytitan, Tetramethoxytitan, Tetraisopropoxytitan, Chlortriethoxytitan, Chlortrimethoxytitan, Dichlordimethoxytitan, Dichlordiethoxytitan, Dichlordiisopropoxytitan, Dichlordibuthoxytitan, Trichlormethoxytitan und Trichlorethoxytitan, ist.

6. Verfahren zur Herstellung von Olefinpolymerisationskatalysatoren gemäß Anspruch 1, wobei das genannte Magnesiumhalogenid Magnesiumchlorid ist; das genannte Alkylaluminoxan, das imprägniert werden soll, eine einzelne Verbindung aus Methylaluminoxan oder Ethylaluminoxan, die löslich in aromatischen Kohlenwasserstoffen, aber unlöslich in aliphatischen Kohlenwasserstoffen ist, oder eine Mischung davon ist; die genannte Titanverbindung, die imprägniert werden soll, eine einzelne oder gemischte Verbindung aus Tetrachlortitan, Tetraethoxytitan und Tetramethoxytitan ist.

7. Verfahren zur Herstellung von Olefinpolymerisationskatalysatoren gemäß Anspruch 1, wobei die Menge des genannten Magnesiumdihalogenids, das imprägniert werden soll, 1,0 bis 5,0 mmol/g, basierend auf der Menge an Silica, ist; die Menge des genannten Alkylaluminoxans in einem Bereich von 1,0 bis 100 als das Al/Mg-Molverhältnis ist; und die Menge der genannten Titanverbindung in einem Bereich von 1,0 bis 50 als das Al/Ti-Molverhältnis ist.

## Revendications

1. Procédé de fabrication de catalyseurs de polymérisation d'oléfines comprenant les étapes séquentielles suivantes :
i) préparation de silice modifiée ayant une surface modifiée qui a été traitée avec un alkyle d'aluminium, un halogénure d'alkylmagnésium, un silane de chlorotriméthyle ou un trichloroborane ;
ii) imprégnation d'un halogénure de magnésium dans ladite silice modifiée ;
iii) imprégnation d'un aluminoxane d'alkyle dans ladite silice modifiée dans laquelle ledit halogénure de magnésium est imprégné ; et
iv) imprégnation d'un composé de titane dans ladite silice modifiée dans laquelle ledit halogénure de magnésium et ledit aluminoxane d'alkyle sont imprégnés ;
dans lequel l'halogénure de magnésium est un dihalogénure de magnésium.

2. Procédé de fabrication de catalyseurs de polymérisation d'oléfines selon la revendication 1, dans lequel ledit aluminoxane d'alkyle utilisé dans l'étape iii) ci-dessus se présente sous la forme des formules chimiques 1 et 2 suivantes, et est un ou plusieurs composés choisis dans un groupe de composés qui est soluble dans les hydrocarbures aromatiques mais insoluble dans les hydrocarbures aliphatiques :
[Formule chimique 1] R₂Al-O(-Al(R)-O)n-AlR₂ 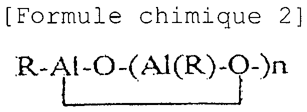
où R est un radical alkyle ayant 1 à 8 atomes de carbone et n est un nombre entier entre 1 et 100.

3. Procédé de fabrication de catalyseurs de polymérisation d'oléfines selon la revendication 2, dans lequel ledit aluminoxane d'alkyle utilisé dans l'étape iii) ci-dessus est un méthylaluminoxane ou un éthylaluminoxane qui est insoluble dans les hydrocarbures aliphatiques.

4. Procédé de fabrication de catalyseurs de polymérisation d'oléfines selon la revendication 1, dans lequel ledit composé de titane utilisé dans l'étape iv) ci-dessus est un composé choisi dans un groupe de composés qui se présente sous la forme de la formule chimique 3 suivante :
[Formule chimique 3] (RO)ₙTiX₍₄₋ₙ₎
où R est un hydrocarbure ayant 1 à 20 atomes de carbone, X est Cl, Br, I ou un pseudo-halogénure, et n est un nombre entier entre 0 et 4.

5. Procédé de fabrication de catalyseurs de polymérisation d'oléfines selon la revendication 4, dans lequel ledit composé de titane est un ou plusieurs composés choisis parmi tétrachlorotitane, tétraéthoxytitane, tétraméthoxytitane, tétraisopropoxytitane, chlorotriéthoxytitane, chlorotriméthoxytitane, dichlorodiméthoxytitane, dichlorodiéthoxytitane, dichlorodiisopropoxytitane, dichlorodibuthoxytitane, trichlorométhoxytitane et trichloroéthoxytitane.

6. Procédé de fabrication de catalyseurs de polymérisation d'oléfines selon la revendication 1, dans lequel ledit halogénure de magnésium est du chlorure de magnésium ; ledit aluminoxane d'alkyle devant être imprégné est un composé simple de méthylaluminoxane ou d'éthylaluminoxane qui est soluble dans les hydrocarbures aromatiques mais insoluble dans les hydrocarbures aliphatiques, ou un mélange de ceux-ci ; ledit composé de titane devant être imprégné est un composé simple ou mixte de tétrachlorotitane, tétraéthoxytitane et tétraméthoxytitane.

7. Procédé de fabrication de catalyseurs de polymérisation d'oléfines selon la revendication 1, dans lequel la quantité dudit dihalogénure de magnésium devant être imprégné est de 1,0 à 5,0 mmole/g sur la base de la quantité de silice ; la quantité dudit aluminoxane d'alkyle est dans une plage de 1,0 à 100 pour ce qui est du rapport molaire Al/Mg ; et la quantité dudit composé de titane est dans une plage de 1,0 à 50 pour ce qui est du rapport molaire Al/Ti.
